# EUROPÄISCHE PATENTSCHRIFT

(11) **EP 3 044 475 B1**
(45) Veröffentlichungstag und Bekanntmachung des Hinweises auf die Patenterteilung: **11.10.2017**
(21) Anmeldenummer: 14744594.4
(22) Anmeldetag: 30.07.2014
(51) Int. Cl.: F16G 3/08

(54) **SYNCHRONRIEMEN MIT RIEMENSCHLOSS**
SYNCHRONOUS BELT WITH BELT FASTENER
COURROIE SYNCHRONE POURVUE D'UNE ATTACHE DE COURROIE

(30) Priorität: 12.09.2013 DE 102013110027
(43) Veröffentlichungstag der Anmeldung: 20.07.2016
(73) Patentinhaber: SIG Technology AG, 8212 Neuhausen am Rheinfall (CH)
(72) Erfinder: VOLLBARTH, Jürgen, 32457 Porta Westfalica (DE); VON BIRGELEN, Bernd, 52525 Waldfeucht (DE); KLAUS, Markus, 52249 Eschweiler (DE)
(74) Vertreter: Cohausz & Florack
(86) Internationale Anmeldenummer: PCT/EP2014/066396
(87) Internationale Veröffentlichungsnummer: WO 2015/036163

(56) Entgegenhaltungen:
- DE-A1-102004 025 170

## Beschreibung

Die Erfindung betrifft einen Synchronriemen, insbesondere Zahnriemen, mit einem ersten Ende, einem zweiten Ende, einer Rückseite, einer Vorderseite, und mit mehreren an der Rückseite und/oder der Vorderseite angeordneten Zähnen, wobei das erste Ende wenigstens eine Ausnehmung aufweist, wobei das zweite Ende wenigstens einen in die Ausnehmung einschiebbaren Finger aufweist, und wobei das erste Ende und das zweite Ende durch Verbindungsmittel lösbar miteinander verbindbar sind.

Synchronriemen und insbesondere Zahnriemen sind in vielfältigen Ausgestaltungen bekannt. Zahnriemen sind formschlüssige Antriebs- oder Transportelemente, die in gleichmäßigen Abständen Zähne aufweisen. Zahnriemen werden üblicherweise über mehrere Riemenscheiben geführt, wobei die Riemenscheiben Zahnlücken aufweisen können, deren Abstände den Abständen der Zähne des Zahnriemens entsprechen. Auf diese Weise können die Zähne des Zahnriemens in die Zahnlücken der Riemenscheibe eingreifen und eine formschlüssige Verbindung ausbilden. Durch die formschlüssige Verbindung weisen Zahnriemen, anders als Flach- oder Keilriemen, einen synchronen Lauf und einen besonders hohen Wirkungsgrad auf.

Zahnriemen werden häufig aus Kunststoff hergestellt. Zur Erhöhung der Zugfestigkeit weisen viele Zahnriemen verstärkende Zugmittel aus Metall oder besonders zugfesten Fasern auf. Bei dem Zugmittel kann es sich beispielsweise um Metalldrähte handeln, die von dem Grundmaterial des Riemens, beispielsweise Kunststoff, eingeschlossen sind.

Synchronriemen und Zahnriemen werden regelmäßig als Endlosriemen, also als geschlossene Riemen ohne "Anfang" und "Ende" ausgeführt. Endlosriemen haben den Vorteil, dass der Riemen keine Schwachstelle aufweist und entlang seiner gesamten Länge gleich bleibende Eigenschaften hat. Insbesondere weisen Endlosriemen entlang ihrer gesamten Länge eine nahezu gleich bleibende (Zug-)Steifigkeit auf, so dass bei Belastung des Riemens eine über die gesamte Länge des Riemens gleich verteilte Dehnung auftritt. Hierdurch kann ein besonders guter Gleichlauf des Riemens erzielt werden.

Endlosriemen haben jedoch den Nachteil, dass sich ihre Montage oder Demontage schwierig gestalten kann. Um einen Endlosriemen zu montieren oder zu demontieren, muss der Riemen im Ganzen von oben oder unten über die Riemenscheiben eingebaut werden. Es besteht daher seit langer Zeit der Wunsch, Riemen - wie einen Gürtel - öffnen und wieder verschließen zu können. Eine derartige Vorrichtung zum Öffnen und Verschließen eines Riemens wird auch als "Riemenschloss" bezeichnet.

Möglichkeiten, einen Riemen zu öffnen und wieder zu verschließen, sind beispielsweise aus der DE 44 42 927 A1 und der DE 2 322 343 A bekannt. In beiden Dokumenten wird in ähnlicher Weise vorgeschlagen, an den Enden des Riemens Zungen und Ausschnitte vorzusehen, die ineinander geschoben werden können. In den Zähnen sind quer zur Längsrichtung des Riemens in Richtung der Riemenbreite durch die gesamte Länge der Zähne verlaufende Bohrungen vorgesehen. Zur formschlüssigen Verbindung der beiden Enden des Riemens werden Verriegelungsstifte durch die Bohrungen geschoben.

Ein weiteres Riemenschloss ist aus der DE 10 2004 025 170 A1 bekannt. Es wird wiederum vorgeschlagen, an den beiden Enden des Zahnriemens ineinander greifende Fingerzinken vorzusehen. In die Fingerzinken sind umlaufende Nuten eingeformt. Elastische Verbindungsklammern aus Blech sollen die Fingerzinken umgreifen, in die Nuten einrasten und dabei die beiden Enden des Zahnriemens im Bereich der Fingerzinken formschlüssig miteinander verbinden.

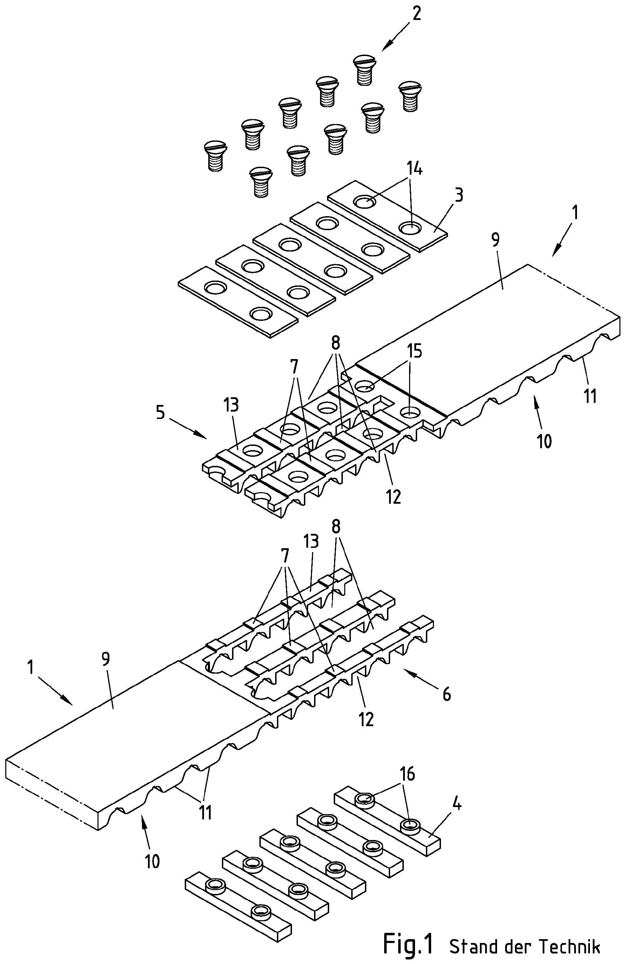

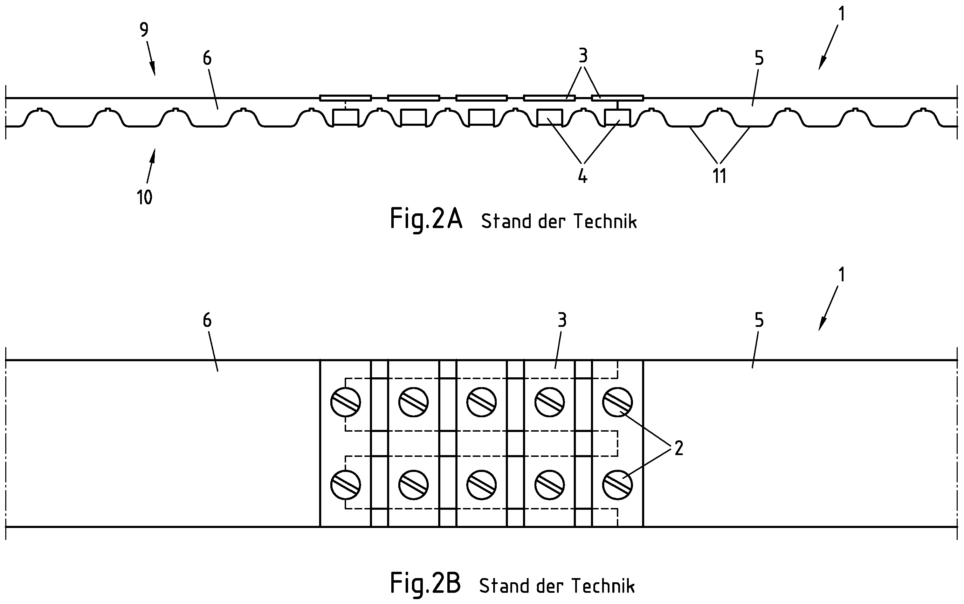

Eine weitere bekannte Möglichkeit, zwei Enden eines Zähnriemens miteinander zu verbinden, wird in den Figuren 1, 2A und 2B dargestellt sowie im speziellen Teil der Beschreibung näher erläutert.

Problematisch an den beschrieben Riemenschlössern ist die Tatsache, dass der Riemen im Bereich des Schlosses keine durchgehenden Zugträger aufweist und damit eine geringere Zugsteifigkeit als im restlichen Bereich des Riemens aufweist. Bei konstanter Zugbelastung kommt es also im Bereich des Schlosses zu einer größeren Längendehnung als im übrigen Bereich des Riemens. Dies liegt insbesondere daran, dass die Zugelemente, welche wesentlich für die (Zug-)Steifigkeit des Riemens sind, im Bereich des Schlosses zwangsläufig durchtrennt sind. Das Schloss selbst kann die Zugsteifigkeit jedoch regelmäßig nicht wieder auf das Niveau des übrigen Riemens anheben.

Eine überproportional hohe Längsdehnung des Riemens im Bereich des Riemenschlosses hat mehrere Nachteile. Zunächst führt eine ungleichmäßig verteilte Längsdehnung dazu, dass auch der Abstand der Zähne ungleich verteilt ist. Dies führt zu einem unsauberen, verschleißbehafteten Eingriff der Zähne in die Zahnlücken der Riemenscheiben.

Zudem führt eine unregelmäßige Längsdehnung des Riemens bei Transportriemen dazu, dass sich die Abstände zwischen an dem Riemen angeordneten Anbauelementen unter Last ungleichmäßig verändern können. Bei den Anbauelementen kann es ich beispielsweise um Profile oder Adapter handeln, an denen Transportbehälter befestigt werden können. Es kann das Problem auftreten, dass die Anbauelemente im unbelasteten Zustand einen konstanten Abstand zueinander aufweisen und unter Last keine konstanten Abstände zueinander mehr einhalten. Insbesondere kann das Problem auftreten, dass sich der Abstand der Anbauelemente im Bereich des Riemenschlosses unter Last stärker vergrößert als im übrigen Bereich des Riemens. Ein konstanter Abstand von Transportbehältern ist unter anderem deshalb auch unter Last gewünscht und notwendig, um die Transportbehälter zuverlässig be- und entladen zu können.

Der Erfindung liegt daher die Aufgabe zugrunde, den eingangs beschriebenen und zuvor näher erläuterten Synchronriemen derart auszugestalten und weiterzubilden, dass eine übermäßige Längsdehnung im Bereich des Riemenschlosses verhindert wird.

Diese Aufgabe wird bei einem Synchronriemen nach dem Oberbegriff von Patentanspruch 1 dadurch gelöst, dass die Zähne des ersten Endes gegenüber den Zähnen des zweiten Endes im verbundenen, ungespannten Zustand einen Versatz aufweisen.

Unter einem Versatz wird eine in Längsrichtung des Riemens versetzte bzw. verschobene Lage der Zähne des ersten Endes des Riemens gegenüber den Zähnen des zweiten Endes des Riemens verstanden. Dieser Versatz soll im ungespannten Zustand auftreten, also in einem Zustand, in dem der Riemen in Längsrichtung nicht belastet ist. Ein Versatz tritt natürlich nur im verbundenen Zustand auf, also in einem Zustand, in welchem die beiden Enden des Riemens miteinander verbunden sind und einen geschlossenen Riemen bilden. Durch den Versatz entsteht ein Untermaß; der Riemen ist also im ungespannten Zustand im Bereich des Schlosses etwas zu kurz. Durch den Versatz kann dem Nachteil begegnet werden, dass der Riemen im Bereich des Riemenschlosses, also im Verbindungsbereich der beiden Enden des Riemens, eine verringerte Zugsteifigkeit aufweist. Denn je nach Einsatzgebiet muss ein Synchronriemen ohnehin mit einer bestimmten Vorspannung oder Betriebsspannung betrieben werden. Diese Spannung führt bei bekannten Riemen zu einer unerwünscht hohen Längsdehnung des Riemens im Bereich des Riemenschlosses. Die Längsdehnung im übrigen Bereich des Riemens kann demgegenüber vernachlässigt werden.

Die Erfindung hat erkannt, dass der Riemen im Bereich des Riemenschlosses gezielt um eine bestimmte Länge "verkürzt" werden sollte und dass diese Länge möglichst genau der im Betrieb erwarteten Längsdehnung im Bereich des Riemenschlosses entsprechen sollte. Ermöglicht wird diese Verkürzung durch einen Versatz der Zahnflanken im Bereich des Riemenschlosses. Mit anderen Worten sind die Zahnflanken des einen Endes des Riemens erfindungsgemäß im ungespannten Zustand des Riemens nicht auf einer Linie mit den Zahnflanken des anderen Endes des Riemens. Erst im gespannten, belasteten Zustand verschwindet der Versatz und der Riemen erreicht seine gewünschte Nennlänge. Auch die entscheidenden Zahnflanken sind im gespannten, belasteten Zustand wieder auf einer Linie angeordnet. Der Riemen wird also im Hinblick auf eine bestimmte Vorspannung bzw. Betriebsspannung optimiert.

Nach einer vorteilhaften Ausgestaltung der Erfindung ist vorgesehen, dass der Versatz eine Länge zwischen 0,1 mm und 1,5 mm aufweist. Versuche haben ergeben, dass ein Versatz in dem genannten Bereich für viele typische Betriebsspannungen des Riemens sehr gute Ergebnisse ermöglicht.

In weiterer Ausgestaltung der Erfindung wird vorgeschlagen, dass der Synchronriemen Rückenbleche und/oder Einlegeteile als Verbindungsmittel aufweist. Durch Rückenbleche und Einlegeteile kann eine besonders zuverlässige Klemmverbindung, beispielsweise mittels Schrauben, erzeugt werden. Beispielsweise können die Rückenbleche dazu dienen, die durch die Schraubverbindung entstehenden Zugkräfte über eine recht große Fläche in den Riemen einzuleiten. Auf diese Weise kann die auf den Riemen wirkende Druckbelastung möglichst gering gehalten werden und Verformungen oder Beschädigungen am Riemen verhindert werden. Die Rückenbleche können beispielsweise aus Stahl hergestellt sein. Die Einlegeteile können aus einem ähnlichen oder identischen Material wie die Zähne des Riemens hergestellt sein und können ein Innengewinde, beispielsweise ein Innengewinde aus Stahl, aufweisen. Vorzugsweise erstrecken sich sowohl die Rückenbleche als auch die Einlegeteile über die gesamte Breite des Riemens, so dass sie alle Finger überdecken. Um die Flexibilität des Riemens zu erhalten, kann jedem Zahn ein eigenes Rückenblech und ein eigenes Einlegeteil zugeordnet sein.

Eine weitere Lehre der Erfindung sieht vor, dass die Finger an der Rückseite Vertiefungen zur Aufnahme der Rückenbleche aufweisen. Die Vertiefungen erleichtern die Positionierung der Rückenbleche und dienen somit als Montagehilfe. Zudem bilden die Vertiefungen einen formschlüssigen Anschlag für die Rückenbleche, wodurch die Verbindung der beiden Enden des Riemens zuverlässiger wird. Bevorzugt entspricht die Tiefe der Vertiefungen der Dicke der Rückenbleche, so dass eine ebene Rückseite des Riemens entsteht. Dies verringert die Gefahr, dass der umlaufende Riemen mit benachbarten Bauteilen kollidiert oder an diesen entlang schleift. Unter einem Finger wird ein Vorsprung verstanden, der beispielsweise rechtwinklig, schräg, oder auch abgerundet geformt sein kann. Insbesondere kann die Länge der Finger größer sein als ihre Breite.

Nach einer weiteren Ausgestaltung der Erfindung weisen die Finger an der Vorderseite Nuten zur Aufnahme der Einlegeteile auf. Auch die Nuten erleichtern die Positionierung der Einlegeteile und dienen mithin als Montagehilfe. Zudem wird auch durch Nuten eine formschlüssige Verbindung zwischen den Einlegeteilen und dem Riemen erreicht. Schließlich entspricht auch die Tiefe der Nuten vorzugsweise der Dicke der Einlegeteile um die Form der Zähne zu erhalten. Unter einer Nut wird jede Art von Ausnehmung verstanden, die zur Aufnahme von Einlegeteilen geeignet ist.

In weiterer Ausbildung der Erfindung ist vorgesehen, dass die Nuten und/oder die Vertiefungen in Längsrichtung des Riemens relativ zu den Zähnen außermittig angeordnet sind. Die Nuten und/oder die Vertiefungen sollen außerhalb der Mitte der Zähne angeordnet sein, so dass sich eine asymmetrische Anordnung ergibt. Die außermittige Anordnung der Nuten und/oder Vertiefungen ist eine konstruktiv besonders einfache Möglichkeit, einen Versatz zwischen den Zähnen der beiden Enden des Riemens zu erreichen. Insbesondere kann durch eine außermittige Anordnung der Nuten und/oder Vertiefungen eine definierte Länge des Versatzes präzise vorgegeben werden, so dass bei der Montage keine manuelle Einstellung des Versatzes erfolgen braucht.

Eine weitere Lehre der Erfindung sieht vor, dass die Finger des ersten Endes und/oder des zweiten Endes Durchgangslöcher aufweisen, die von der Rückseite des Riemens zur Vorderseite des Riemens verlaufen. Indem die Durchgangslöcher von der Rückseite zur Vorderseite verlaufen, wird der kürzeste Weg durch den Riemen gewählt. Anders als in den eingangs beschriebenen Dokumenten DE 44 42 927 A1 und DE 2 322 343 A brauchen die Bohrungen also nicht durch die gesamte Länge der Zähne geführt zu werden; sie werden stattdessen quer durch die Zähne geführt. Der Vorteil möglichst kurzer Bohrungen liegt darin, dass eine Klemmverbindung mit sehr hoher Spannung erreicht werden kann ohne dass hierbei eine Verformung des Riemens zu befürchten ist.

Nach einer weiteren Ausbildung der Erfindung weist der Synchronriemens Anschlusselemente auf. Zur Befestigung der Anschlusselemente weist der Synchronriemen vorzugsweise Durchgangslöcher auf. Durch die Durchgangslöcher und die Anschlusselemente kann der Riemen als Transportriemen eingesetzt werden. Bei den Anschlusselementen kann es sich beispielsweise um Profile oder Adapter handeln, an denen Transportbehälter befestigt werden können.

In weiterer Ausgestaltung der Erfindung ist vorgesehen, dass die Finger und die Ausnehmungen eine Länge von sechs bis vierzehn, insbesondere von acht bis zwölf Zähnen aufweisen. Die Länge der Finger und der Ausnehmungen bestimmt die Länge des Riemenschlosses. Einerseits soll die Länge des Riemenschlosses in Grenzen gehalten werden, da die Zugsteifigkeit des Riemens in diesem Bereich verringert ist. Andererseits kann bei einer zu geringen Länge des Riemenschlosses keine zuverlässige Verbindung der beiden Enden des Riemens erreicht werden. Als besonders guter Kompromiss haben sich Längen von sechs bis vierzehn, insbesondere von acht bis zwölf Zähnen erwiesen.

Schließlich wird in weiterer Ausbildung der Erfindung vorgeschlagen, dass der Synchronriemen aus Kunststoff hergestellt ist und Zugelemente aus Metall, insbesondere Stahl, aufweist. Kunststoffe zeichnen sich insbesondere durch ihre geringen Kosten, ihre hohe Elastizität und die Möglichkeit einer besonders variablen Formgebung aus. Zugelemente aus Stahl zeichnen sich durch ihre sehr hohe Zugfestigkeit aus. Indem Zugelemente aus Stahl in den Kunststoff eingebettet werden, lassen sich die Eigenschaften beider Materialien in vorteilhafter Weise kombinieren. Alternativ kann es sich bei den Zugelementen um jeden anderen zugbelastbaren Werkstoff handeln, beispielsweise um Glasfasern (Kevlar), Kohlenstofffasern oder Textilfasern.

Die Erfindung wird nachfolgend anhand einer lediglich ein bevorzugtes Ausführungsbeispiel darstellenden Zeichnung näher erläutert. In der Zeichnung zeigen
- Fig. 1: einen aus dem Stand der Technik bekannten Synchronriemen mit Verbindungselementen im unmontierten Zustand in perspektivischer Ansicht,
- Fig. 2A: den Synchronriemen aus Fig. 1 im montierten Zustand in Seitenansicht,
- Fig. 2B: den Synchronriemen aus Fig. 1 im montierten Zustand in Draufsicht,
- Fig. 3A: einen erfindungsgemäßen Synchronriemen mit Versatz im montierten, unbelasteten Zustand in Seitenansicht,
- Fig. 3B: den Synchronriemen aus Fig. 3A im montierten, unbelasteten Zustand in Draufsicht,
- Fig. 3C: den Synchronriemen aus Fig. 3A im montierten, unbelasteten Zustand in einer Ansicht von unten,
- Fig. 3D: eine Detailansicht des in Fig. 3A mit "III D" bezeichneten Bereichs des Synchronriemens,
- Fig. 3E: eine Detailansicht des in Fig. 3C mit "III E" bezeichneten Bereichs des Synchronriemens,
- Fig. 4A: einen erfindungsgemäßen Synchronriemen im montierten, belasteten Zustand in Seitenansicht,
- Fig. 4B: den Synchronriemen aus Fig. 4A im montierten, belasteten Zustand in Draufsicht,
- Fig. 4C: den Synchronriemen aus Fig. 4A im montierten, belasteten Zustand in einer Ansicht von unten,
- Fig. 4D: eine Detailansicht des in Fig. 4A mit "IV D" bezeichneten Bereichs des Synchronriemens, und
- Fig. 4E: eine Detailansicht des in Fig. 4C mit "IV E" bezeichneten Bereichs des Synchronriemens.

Fig. 1 zeigt einen aus dem Stand der Technik bekannten Synchronriemen 1 mit Verbindungselementen im unmontierten Zustand in perspektivischer Ansicht. Bei den Verbindungselementen handelt es sich um Schrauben 2, Rückenbleche 3 und Einlegeteile 4. Bei dem in Fig. 1 dargestellten Synchronriemen 1 handelt es sich um einen Zahnriemen mit einem ersten Ende 5 und mit einem zweiten Ende 6.

Das erste Ende 5 des Synchronriemens 1 weist zwei Finger 7 und drei Ausnehmungen 8 auf. Eine der Ausnehmungen 8 ist zwischen den beiden Fingern 7 angeordnet, während die beiden anderen Ausnehmungen 8 seitlich neben den Fingern 7 angeordnet sind. In entsprechender Weise weist das zweite Ende 6 des Synchronriemens 1 drei Finger 7 und zwei Ausnehmungen 8 auf, wobei die beiden Ausnehmungen 8 in der in Fig. 1 dargestellten Art zwischen den drei Fingern 7 angeordnet sind.

Das erste Ende 5 und das zweite Ende 6 des Synchronriemens 1 sind komplementär geformt. Das bedeutet, dass die Finger 7 des ersten Endes 5 exakt in die Ausnehmungen 8 des zweiten Endes 6 passen. Ebenso passen die Finger 7 des zweiten Endes 6 genau in die Ausnehmungen 8 des ersten Endes 5. Beim Ineinanderschieben der beiden Enden 5, 6 ergänzen sich daher die Finger 7 und die Ausnehmungen 8 zu einer lückenlosen Fläche (siehe auch Fig. 2B).

Der Synchronriemen 1 weist eine ebene Rückseite 9 und eine Vorderseite 10 auf. An der Vorderseite 10 sind Zähne 11 angeordnet.

Die Finger 7 weisen an der Vorderseite 10 Nuten 12 auf, die quer zur Längsrichtung des Riemens 1 in der Mitte der Zähne 11 verlaufen. Die Nuten 12 dienen der Aufnahme der Einlegeteile 4. Zudem weisen die Finger 7 an der Rückseite Vertiefungen 13 auf. Die Vertiefungen 13 dienen der Aufnahme der Rückenbleche 3 und verlaufen ebenfalls mittig zu den Zähnen 11. Die Rückenbleche 3 weisen Durchgangslöcher 14 auf. In ähnlicher Weise weisen die Finger 7 des ersten Endes 5 Durchgangslöcher 15 auf. Schließlich weisen die Einlegeteils 4 Öffnungen 16 auf, die auf die Schrauben 2 abgestimmt sind.

Die beiden Enden 5, 6 des Riemens 1 können miteinander verbunden werden, indem die Finger 7 eines Endes in die Ausnehmungen 8 des jeweils anderen Endes geschoben werden. Anschließend werden die Rückenbleche 3 in die Vertiefungen 13 gelegt und die Einlegeteile 4 werden in die Nuten 12 gesteckt. Bereits durch das Einlegen bzw. Einstecken der Rückenbleche 3 und insbesondere der Einlegeteile 4 entsteht eine formschlüssige Verbindung zwischen den beiden Enden 5, 6 des Riemens 1. Die formschlüssige Verbindung wird durch eine Verschraubung ergänzt. Hierzu werden die Schrauben 2 durch die Durchgangslöcher 24, 15 gesteckt und in die Öffnungen 16 geschraubt. Auf diese Weise entsteht neben der formschlüssigen Verbindung auch eine kraftschlüssige Verbindung zwischen den beiden Enden 5, 6 des Riemens 1, nämlich eine Klemmverbindung.

Fig. 2A und Fig. 2B zeigen den Synchronriemen 1 aus Fig. 1 im montierten Zustand in Seitenansicht (Fig. 2A) bzw. in Draufsicht auf die Rückseite 9 des Riemens 1 (Fig. 2B). Die bereits im Zusammenhang mit Fig. 1 beschriebenen Merkmale sind in Fig. 2A und in Fig. 2B sowie in allen folgenden Figuren mit identischen Bezugszeichen versehen.

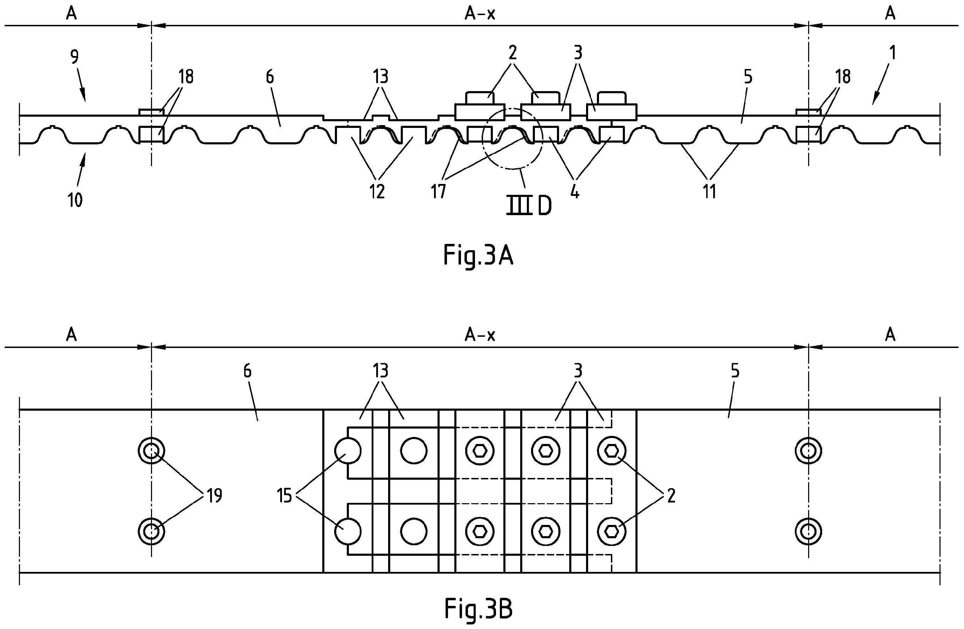

Fig. 3A zeigt einen erfindungsgemäßen Synchronriemen 1 mit Versatz 17 im montierten, unbelasteten Zustand in Seitenansicht. Ein Unterschied zu dem in Fig. 1 bis Fig. 2B gezeigten Synchronriemen 1 besteht darin, dass zwischen den Zähnen 11 der Finger 7 des ersten Endes 5 und den Zähnen 11 der Finger 7 des zweiten Endes 6 ein Versatz 17 vorhanden ist. Mit anderen Worten sind die Flanken der Zähne 11 im Bereich des Riemenschlosses nicht auf einer Linie, sondern versetzt zueinander angeordnet. Dies kann beispielsweise dadurch erreicht werden, dass die Nuten 12 und/oder die Vertiefungen 13 nicht exakt in der Mitte der Zähne, sondern außermittig angeordnet werden. Dies hat einen ähnlichen Effekt als wenn man die Finger 7 der beiden Enden 5, 6 "zu weit" in die Ausnehmungen 8 des jeweils anderen Endes 6, 5 schieben würde. Das Vorsehen eines Versatzes 17 hat zur Folge, dass der Abstand A zwischen einer definierten Anzahl von Zähnen 11 (in Fig. 3A: Zehn Zähne) im Bereich des Riemenschlosses um eine Länge X, die dem Versatz 17 entspricht, verkürzt ist. Der in Fig. 3A dargestellte Synchronriemen 1 weist also im unbelasteten Zustand ein Untermaß auf.

Ein weiterer Unterschied zu dem in Fig. 1 bis Fig. 2B gezeigten Synchronriemen 1 besteht darin, dass der in Fig. 3A gezeigte Synchronriemen 1 Anschlusselemente 18 aufweist, die in in dem Synchronrietnen 1 vorgesehenen Durchgangslöchern 19 befestigt sind. Über die Anschlusselemente 18 können Anschlussteile mit dem Synchronriemen 1 verbunden werden. Dies ist beispielsweise dann erforderlich, wenn der Riemen 1 nicht als Antriebsriemen, sondern als Transportriemen verwendet wird. Bei dem in Fig. 3A gezeigten Synchronriemen 1 weisen die Anschlusselemente 18 grundsätzlich einen Abstand A voneinander auf, der dem Abstand von zehn Zähnen 11 entspricht. Eine Ausnahme gilt für den Bereich des Riemenschlosses, wo der Abstand A aufgrund des Versatzes 17 um die Länge X verkürzt ist. Diese Verkürzung um die Länge X ist auch aus Fig. 3B ersichtlich, die den Synchronriemen 1 aus Fig. 3A im montierten, unbelasteten Zustand in Draufsicht zeigt.

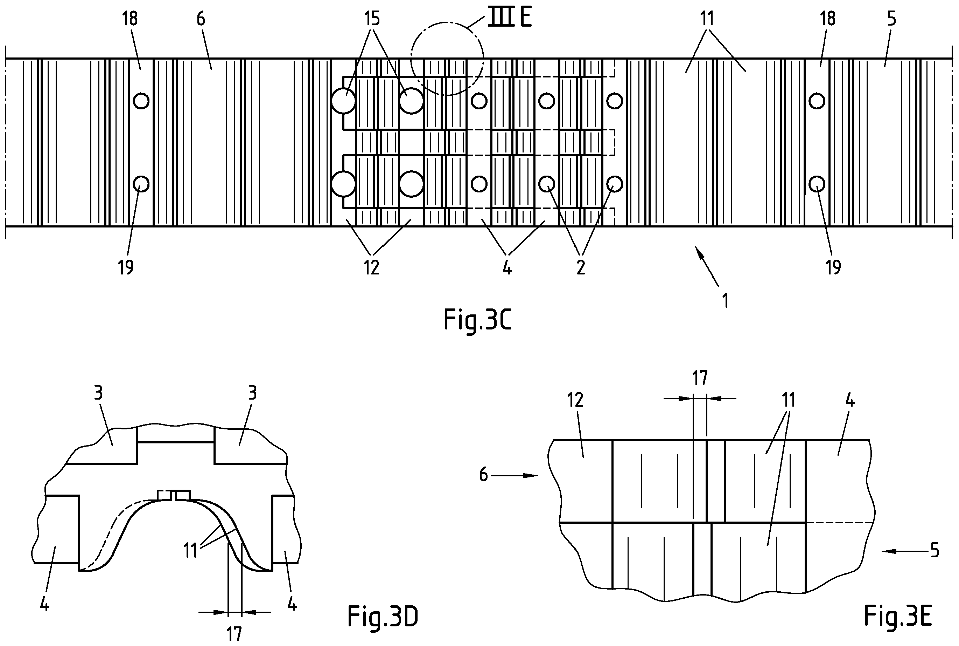

In Fig. 3C ist der Synchronriemen 1 aus Fig. 3A im montierten, unbelasteten Zustand in einer Ansicht von unten dargestellt. Mit einer Ansicht von unten ist eine Ansicht von der Vorderseite 10, also von der Seite der Zähne 11 gemeint. Im Bereich des Riemenschlosses ist deutlich erkennbar, dass die Flanken der Zähne 11 nicht auf einer Linie, sondern versetzt verlaufen.

Fig. 3D zeigt eine Detailansicht des in Fig. 3A mit "III D" bezeichneten Bereichs des Synchronriemens 1. Fig. 3E zeigt demgegenüber eine Detailansicht des in Fig. 3C mit "III E" bezeichneten Bereichs des Synchronriemens 1. Aufgrund der vergrößerten Darstellung ist in Fig. 3D und in Fig. 3E besonders klar erkennbar, dass der Zahn 11 des Fingers 7 des ersten Endes 5 gegenüber dem Zahn 11 des Fingers 7 des zweiten Endes 6 um einen Versatz 17 versetzt ist. Insbesondere sind die Zahnflanken nicht auf einer Linie angeordnet.

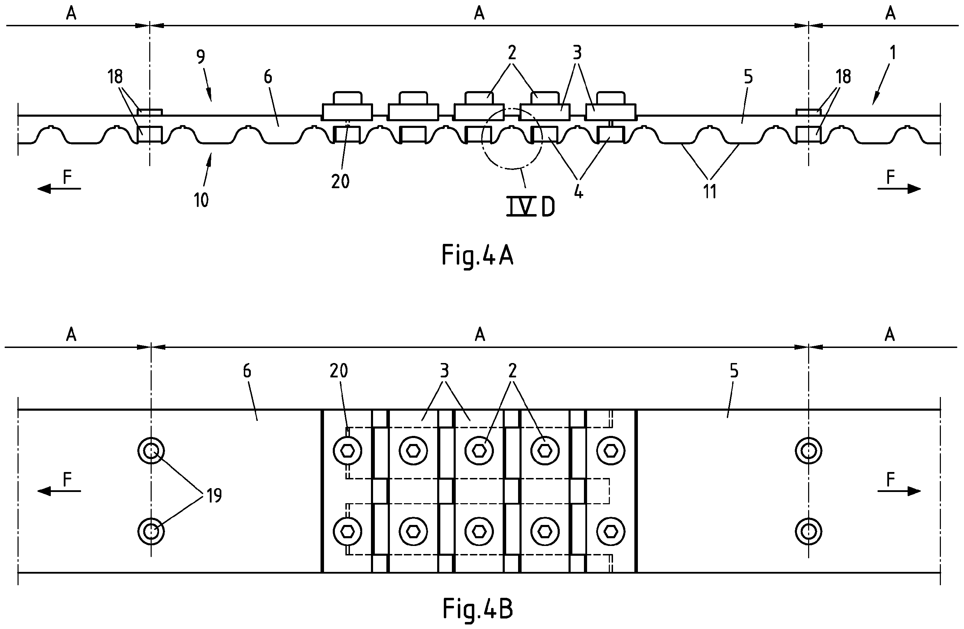

In Fig. 4A ist ein erfindungsgemäßer Synchronriemen 1 im montierten, belasteten Zustand in Seitenansicht dargestellt. Der in Fig. 4A dargestellte Synchronriemen 1 ist mit einer Zugkraft F belastet, die im Betrieb, etwa als Folge einer Vorspannung, typischerweise auftritt. Aufgrund der Tatsache, dass der Synchronriemen 1 im Bereich des Riemenschlosses eine wesentlich geringere Zugsteifigkeit aufweist als im übrigen Bereich des Riemens 1, hat die Zugkraft F zu einer Dehnung des Riemens im Bereich des Riemenschlosses geführt, während die Dehnung im übrigen Bereich des Riemens 1 vernachlässigbar ist.

Die verstärkte Dehnung im Bereich des Riemenschlosses ist einerseits darauf zurückzuführen, dass die typischerweise in dem Riemen 1 vorhandenen Zugelemente dort durchtrennt sind und andererseits darauf, dass trotz der festen Verbindung der beiden Enden 5, 6 eine geringe Relativbewegung zwischen den Fingern 7 der beiden Enden 5, 6 nicht ganz verhindert werden kann. Dies hat zur Folge, dass der im unbelasteten Zustand vorhandene Versatz 17 im in Fig. 4A dargestellten belasteten Zustand nicht mehr vorhanden ist und nun auch die beiden Anschlusselemente 18, welche den Bereich des Riemenschlosses einschließen, einen Abstand A zueinander aufweisen. Das durch den Versatz 17 im unbelasteten Zustand erreichte Maß A-X weicht also im belasteten Zustand dem gewünschten Nennmaß A. Anstelle des Versatzes 17 ist zwischen den Enden der Finger 7 und den Enden der Ausnehmungen 8 eine Lücke 20 entstanden, deren Länge etwa der Länge des Versatzes 17 entspricht.

Fig. 4B zeigt den Synchronriemen 1 aus Fig. 4A im montierten, belasteten Zustand in Draufsicht, also in einer Sicht auf die Rückseite 9 des Riemens 1. Auch in dieser Darstellung ist erkennbar, dass der Riemen 1 durch die Zugkraft F im Bereich des Riemenschlosses keinen Versatz mehr aufweist und die beiden in diesem Bereich angeordneten Anschlusselemente 18 einen Abstand A zueinander aufweisen. Deutlich erkennbar sind zudem die entstandenen Lücken 20.

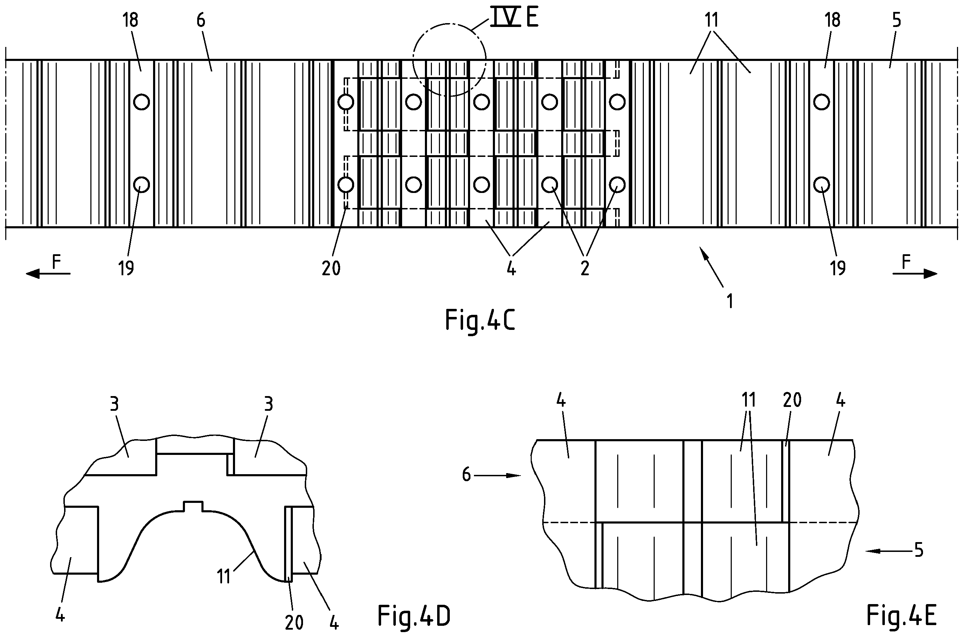

In Fig. 4C ist der Synchronriemen 1 aus Fig. 4A im montierten, belasteten Zustand in einer Ansicht von unten, also von der Vorderseite 10, dargestellt. Auch in dieser Darstellung wird deutlich, dass aufgrund der Zugkraft F nun kein Versatz mehr vorhanden ist und die Flanken der Zähne 11 im Bereich des Riemenschlosses wieder auf einer Linie angeordnet sind. Klar erkennbar sind zudem die Lücken 20.

Fig. 4D zeigt eine Detailansicht des in Fig. 4A mit "IV D" bezeichneten Bereichs des Synchronriemens 1. Fig. 4E zeigt demgegenüber eine Detailansicht des in Fig. 4C mit "IV E" bezeichneten Bereichs des Synchronriemens 1. Aufgrund der vergrößerten Darstellung ist in Fig. 4D und in Fig. 4E besonders klar erkennbar, dass sich die Zähne 11 aufgrund der Zugkraft F in ihre gewünschte Betriebsposition verschoben haben und dass in dieser gewünschten Position kein Versatz zwischen den Zähnen 11 mehr vorhanden ist. Mit anderen Worten liegen die Flanken der Zähne 11 wieder auf einer Linie. In Fig. 4D und in Fig. 4E ist schließlich erkennbar, dass sich auch zwischen den Zähnen 11 und den entsprechenden Einlegeteilen 4 Lücken 20 ausbilden. Die Lücke 20 entsteht dabei jeweils auf der unbelasteten Seite des Einlegeteils 4, während die belastete Seite des Einlegeteils 4 unmittelbar an dem Zahn 11 anliegt.

## Patentansprüche

1. Synchronriemen, insbesondere Zahnriemen (1), mit einem ersten Ende (5), einem zweiten Ende (6), einer Rückseite (9), einer Vorderseite (10), und mit mehreren an der Rückseite (9) und/oder der Vorderseite (10) angeordneten Zähnen (11), wobei das erste Ende (5) wenigstens eine Ausnehmung (8) aufweist, wobei das zweite Ende (6) wenigstens einen in die Ausnehmung (8) einschiebbaren Finger (7) aufweist, und wobei das erste Ende (5) und das zweite Ende (6) durch Verbindungsmittel (2, 3, 4) lösbar miteinander verbindbar sind,
**dadurch gekennzeichnet, dass**
die Zähne (11) des ersten Endes (5) gegenüber den Zähnen (11) des zweiten Endes (6) im verbundenen, ungespannten Zustand einen Versatz (17) aufweisen.

2. Synchronriemen nach Anspruch 1, **dadurch gekennzeichnet, dass** der Versatz (17) eine Länge zwischen 0,1 mm und 1,5 mm aufweist.

3. Synchronriemen nach Anspruch 1 oder 2, **dadurch gekennzeichnet, dass** der Synchronriemen (1) Rückenbleche (3) und/oder Einlegeteile (4) als Verbindungsmittel aufweist.

4. Synchronriemen nach einem der Ansprüche 1 bis 3, **dadurch gekennzeichnet, dass** die Finger (7) an der Rückseite (9) Vertiefungen (13) zur Aufnahme der Rückenbleche (3) aufweisen.

5. Synchronriemen nach einem der Ansprüche 1 bis 4, **dadurch gekennzeichnet, dass** die Finger (7) an der Vorderseite (10) Nuten (12) zur Aufnahme der Einlegeteile (4) aufweisen.

6. Synchronriemens nach einem der Ansprüche 1 bis 5, **dadurch gekennzeichnet, dass** die Nuten (12) und/oder die Vertiefungen (13) in Längsrichtung des Riemens (1) relativ zu den Zähnen (11) außermittig angeordnet sind.

7. Synchronriemens nach einem der Ansprüche 1 bis 6, **dadurch gekennzeichnet, dass** die Finger (7) des ersten Endes (5) und/oder des zweiten Endes (6) Durchgangslöcher (15) aufweisen, die von der Rückseite (9) des Riemens (1) zur Vorderseite (10) des Riemens (1) verlaufen.

8. Synchronriemen nach einem der Ansprüche 1 bis 7, **dadurch gekennzeichnet, dass** der Synchronriemen (1) Anschlusselemente (18) aufweist.

9. Synchronriemen nach einem der Ansprüche 1 bis 8, **dadurch gekennzeichnet, dass** die Finger (7) und die Ausnehmungen (8) eine Länge von sechs bis vierzehn, insbesondere von acht bis zwölf Zähnen (11) aufweisen.

10. Synchronriemen nach einem der Ansprüche 1 bis 9, **dadurch gekennzeichnet, dass** der Synchronriemen (1) aus Kunststoff hergestellt ist und Zugelemente aus Metall, insbesondere Stahl, aufweist.

## Claims

1. Timing belt, particularly a toothed belt (1), having a first end (5), a second end (6), a rear side (9), a front side (10), and having a plurality of teeth (11) arranged on the rear side (9) and/or the front side (10), wherein the first end (5) has at least one cutaway (8), wherein the second end (6) has at least one tine (7) that is insertable into the cutaway (8), and wherein the first end (5) and the second end (6) are detachably connectable to each other by connecting means (2, 3,4),
**characterised in that**
in the connected condition under no tension the teeth (11) of the first end (5) have an offset (17) relative to the teeth (11) of the second end (6).

2. Timing belt according to claim 1, **characterised in that** the offset (17) has a length between 0.1 mm and 1.5 mm.

3. Timing belt according to claim 1 or 2, **characterised in that** the timing belt (1) has back panels (3) and/or inserts (4) as connecting means.

4. Timing belt according to any one of claims 1 to 3, **characterised in that** the tines (7) have recesses (13) on the rear side (9) thereof for accommodating the back panels (3).

5. Timing belt according to any one of claims 1 to 4, **characterised in that** the tines (7) have grooves (12) on the front side (10) thereof for accommodating the inserts (4).

6. Timing belt according to any one of claims 1 to 5, **characterised in that** the grooves (12) and/or recesses (13) are arranged eccentrically relative to the teeth (11) in the longitudinal direction of the belt (1).

7. Timing belt according to any one of claims 1 to 6, **characterised in that** the tines (7) of the first end (5) and/or the second end (6) have through holes (15) which extend from the rear side (9) to the front side (10) of the belt (1).

8. Timing belt according to any one of claims 1 to 7, **characterised in that** the timing belt (1) has connecting elements (18).

9. Timing belt according to any one of claims 1 to 8, **characterised in that** the tines (7) and the recesses (8) are from six to fourteen, particularly from eight to twelve teeth (11) long.

10. Timing belt according to any one of claims 1 to 9, **characterised in that** the timing belt (1) is made from plastic and comprises tensile elements made from metal, particularly steel.

## Revendications

1. Courroie synchrone, en particulier courroie dentée (1), comprenant une première extrémité (5), une seconde extrémité (6), une face arrière (9), une face avant (10) et plusieurs dents (11) disposées sur la face arrière (9) et/ou sur la face avant (10), où la première extrémité (5) présente au moins un évidement (8), où la seconde extrémité (6) présente au moins un doigt (7) enfichable dans l'évidement (8), et où la première extrémité (5) et la seconde extrémité (6) sont reliées l'une à l'autre, de façon amovible, par des moyens de liaison (2,3,4), **caractérisée en ce que** les dents (11) de la première extrémité (5) présentent, par rapport aux dents (11) de la seconde extrémité (6), un décalage (17) à l'état relié et non tendu.

2. Courroie synchrone selon la revendication 1, **caractérisée en ce que** le décalage (17) présente une longueur comprise entre 0,1 mm et 1,5 mm.

3. Courroie synchrone selon la revendication 1 ou 2, **caractérisée en ce que** la courroie synchrone (1) présente, comme moyens de liaison, des tôles arrière (3) et/ou des pièces d'insertion (4).

4. Courroie synchrone selon l'une quelconque des revendications 1 à 3, **caractérisée en ce que** les doigts (7) présentent, sur la face arrière (9), des parties en creux (13) servant au logement des tôles arrière (3).

5. Courroie synchrone selon l'une quelconque des revendications 1 à 4, **caractérisée en ce que** les doigts (7) présentent, sur la face avant (10), des rainures (12) servant au logement des pièces d'insertion (4).

6. Courroie synchrone selon l'une quelconque des revendications 1 à 5, **caractérisée en ce que** les rainures (12) et/ou les parties en creux (13) sont disposées, dans la direction longitudinale de la courroie (1), de façon excentrée par rapport aux dents (11).

7. Courroie synchrone selon l'une quelconque des revendications 1 à 6, **caractérisée en ce que** les doigts (7) de la première extrémité (5) et/ou de la seconde extrémité (6) présentent des trous de passage (15) qui s'étendent depuis la face arrière (9) de la courroie (1) jusqu'à la face avant (10) de la courroie (1).

8. Courroie synchrone selon l'une quelconque des revendications 1 à 7, **caractérisée en ce que** la courroie synchrone (1) présente des éléments de raccordement (18).

9. Courroie synchrone selon l'une quelconque des revendications 1 à 8, **caractérisée en ce que** les doigts (7) et les évidements (8) présentent une longueur allant de six à quatorze dents, en particulier de huit à douze dents (11).

10. Courroie synchrone selon l'une quelconque des revendications 1 à 9, **caractérisée en ce que** la courroie synchrone (1) est fabriquée en matière plastique et présente des éléments de traction en métal, en particulier en acier.
